(19)

Europäisches
Patentamt
European
Patent Office
Office européen
des brevets

(11) **EP 4 465 458 A1**

(12) **EUROPEAN PATENT APPLICATION**

(43) Date of publication:
   **20.11.2024  Bulletin 2024/47**

(21) Application number: **23206634.0**

(22) Date of filing: **30.10.2023**

(51) International Patent Classification (IPC):
   **H01S 3/00** (2006.01)        **H01S 3/23** (2006.01)
   **H01S 3/16** (2006.01)

(52) Cooperative Patent Classification (CPC):
   **H01S 3/0057; H01S 3/2333;** H01S 3/005;
   H01S 3/0092; H01S 3/1611; H01S 3/1643

(84) Designated Contracting States:
   **AL AT BE BG CH CY CZ DE DK EE ES FI FR GB
   GR HR HU IE IS IT LI LT LU LV MC ME MK MT NL
   NO PL PT RO RS SE SI SK SM TR**
   Designated Extension States:
   **BA**
   Designated Validation States:
   **KH MA MD TN**

(30) Priority:  **19.05.2023  LT 2023520**

(71) Applicant: **UAB "Ekspla"**
   **02300 Vilnius (LT)**

(72) Inventors:
   • **MICHAILOVAS, Kirilas**
     **02300 Vilnius (LT)**
   • **MICHAILOVAS, Andrejus**
     **02300 Vilnius (LT)**

(74) Representative: **Draugeliene, Virgina Adolfina
   Tarpine Ltd
   A. P. Kavoliuko g. 24-152
   04328 Vilnius (LT)**

(54)  **EFFICIENT HIGH-INTENSITY LASER SYSTEM WITH HIGH SPATIAL AND TEMPORAL RADIATION QUALITY**

(57)    The invention relates to efficient high-energy ultrashort pulse laser systems ensuring high spatial and temporal radiation quality. A laser system of this invention includes a quantum amplifier of laser radiation having at least one gain element and at least one compensation element of nonlinear phase. Elements of quadratic nonlinearity, in which cascaded nonlinear phenomena occur, are used for nonlinear phase compensation. The negative nonlinear phase required for compensation is obtained by generating the second harmonic radiation in a type-I SHG crystal under phase-mismatch conditions or in a type-II SHG crystal under phase-matching or under phase-mismatching conditions. Multiple SHG crystals and/or a combination of type-I and type-II SHG crystals may be used. An absolute value of the nonlinear phase compensated in the laser system of the present invention is in the range from $\pi$ to $6\pi$ radians, and the residual amount of the accumulated nonlinear phase does not exceed $\pi$. In the preferred embodiment, the energy of output radiation pulses is at least 200 mJ, and duration of the pulses is in the range from 5 ps to 100 ps, and the total efficiency of population inversion utilization in the gain elements is at least 30%.

**Fig. 1**

EP 4 465 458 A1

**Description**

TECHNICAL FIELD OF THE INVENTION

The invention relates to ultrashort pulse laser sources, particularly to efficient high energy ultrashort pulse laser systems in which high spatial and temporal radiation quality is ensured. More specifically, the invention relates to the compensation - using the cascaded quadratic nonlinearity - of the nonlinear phase arising in optical elements due to high intensities in the system.

BACKGROUND OF THE INVENTION

When amplifying the laser radiation of ultrashort pulses, such intensity levels are reached, at which nonlinear effects begin to appear in optical elements of the laser system and even in the air. Nonlinear effects are good when wavelength conversion is required. However, intense radiation also changes properties of the material through which it propagates, and the changed properties of the material affect the radiation, which is sometimes undesirable. The nonlinear, intensity-dependent change in the refractive index of the material is called the Kerr effect or Kerr nonlinearity. Any change in the refractive index results in a phase change. For a laser beam with a certain transverse intensity distribution, the Kerr effect manifests itself in beam focusing or defocusing and by a general deterioration of spatial properties. For ultrashort pulse laser radiation, which also has a temporal intensity profile, the Kerr effect manifests itself in self-phase modulation in time - a change in the carrier frequency under the pulse envelope (appearance of a chirp), lengthening of the pulse, and decrease in the peak intensity. To avoid damaging the active medium, gain saturation is usually not reached, and the population inversion of the active medium is used inefficiently.

The nonlinear change in refractive index is described by the formula

$$\Delta n(x, y, z, t) = n_2 \cdot I(x, y, z, t),$$

and the nonlinear phase change by

$$\Delta\Phi(x, y, t) = \frac{2\pi}{\lambda} \int n_2 \cdot I(x, y, z, t)\, dz,$$

where $n_2$ is called the nonlinear refractive index and $I(x, y, z, t)$ is the spatiotemporal intensity distribution. For a laser beam with the maximum intensity on the beam axis, the accumulated nonlinear phase in the axis of the beam is called $B$-integral and is calculated by the formula:

$$B = \frac{2\pi}{\lambda} \int n_2 \cdot I(z)\, dz,$$

where $I(z)$ is intensity on the beam axis.

A positive $n_2$ results in beam focusing, and a negative $n_2$ results in defocusing of the laser beam. The nonlinear refractive index $n_2$ of solid-state active media used in lasers, such as Nd:YAG, is positive, therefore, when amplifying ultrashort pulse radiation, the intensity value at which the self-focused laser beam would damage the active medium or other optical elements is reached relatively early, before achieving gain saturation regime. For this reason, amplification can only be done up to a certain intensity level. To achieve high pulse energies and at the same time to utilize the population inversion accumulated in the active medium as efficiently as possible, a flat-top beam is formed - the critical intensity will be attained over the entire diameter of the beam at the same time. Additionally, before amplification, laser pulses are stretched in time. Otherwise, active elements of large diameter have to be used, thus sacrificing efficiency and increasing the cost of the system. Amplification of ultrashort pulses shorter than 1 ps up to energies of hundreds of millijoules and higher almost always involves the CPA method - amplification of chirped, i.e. time-stretched, pulses.

A value of $B$-integral is a measure of the nonlinearity. The $B$-integral value at which the beam focusing of the Gaussian spatial profile occurs is considered equal to 3 or $\pi$ radians. When designing the laser amplifiers, this value is used as a limit. A long-term operation of the system with a higher $B$-integral value is unsafe in the sense of damage to optical elements. Only in special cases, it is possible to safely operate the system at higher values of the $B$-integral: if focusing is compensated by diffraction. The largest amount of the nonlinear phase is acquired in the active medium because the radiation amplification takes place here. If the $B$-integral value of 3 rad is attained at a distance smaller than the Rayleigh length, then the beam diffraction is not sufficient to stabilize the beam diameter. The laser beam focuses into a filament of small diameter and eventually damages the active medium. The self-focusing is a critical phenomenon that degrades the spatial properties of the pulse and can cause damage, and what is also important - the spectral/temporal properties of the pulse are also altered by the nonlinearity. The lengthening of the pulse and deterioration of the temporal profile are already noticeable at lower values of the *B-integral* - at around 1 rad.

There are also materials whose $n_2$ is negative under certain conditions. They could be used to compensate the nonlinear phase caused by the active medium if the negative nonlinear phase was comparable to the positive nonlinear phase accumulated in the active medium. By choosing a proper length of the compensator, the negative nonlinear phase can compensate the total amount of the positive nonlinear phase accumulated throughout the optical system. The negative nonlinear refractive index is exhibited by polymers and other organic materials, some liquids, graphene oxide nanoparticles, $Ag:Al_2O_3$, and semiconductor materials.

US patent No. 6141362 (D.D.Meyerhofer and O.A.Konoplev, priority date: 1998-06-05) describes a system for amplifying chirped laser pulses, the system consisting of a source of short seed pulses, a pulse stretcher, an amplifier active medium, and a pulse compressor, and which additionally contains a semiconductor *B-integral* compensator. Said *B-integral* compensator is a thin-film GaAs or AlGaAs structure with the negative nonlinear refractive index $n_2$. In some implementations, the semiconductor *B-integral* compensator is placed at the beginning of the system in the path of the unamplified pulse and works as a pre-compensator. In other implementations, the compensator is placed at the end of the system in the path of the amplified pulse and works as a post-compensator. A proper position for placement of the compensator depends on several parameters. If system conditions of operation are such that there is a risk of damaging the active medium, the compensator must be used before the pulse amplification. However, it is more difficult to accumulate the necessary amount of the negative nonlinear phase by the initial seed pulse of low energy. When the compensator is located behind the gain element (and even behind the pulse compressor), the higher pulse intensity makes it easier to accumulate the necessary amount of the nonlinear phase. In semiconductors, the negative $n_2$ has two terms: a fast term caused by bound electrons in the semiconductor material and a slow term caused by excited free carriers. Semiconductors have the negative $n_2$ in this range of bandgap energies $E_g$: $hv < E_g < 1{,}42hv$. For example, for 1053 nm wavelength, it is easiest to apply a GaAs compensator, for 850 nm - AlGaAs, for 800 nm - CdSe. The semiconductor structure must be thin (400 $\mu$m and 2 mm were used in the presented examples) so that linear and two-photon absorption do not show up strongly, and the thickness fits into the laser beam waist. One more requirement: a characteristic relaxation time of excited carriers in the semiconductor material should be chosen to be smaller than the pulse width in order the absolute value of the negative $n_2$ to be similar to or greater than the positive $n_2$ of the laser active medium. Said relaxation time of GaAs is equal to 100 ps, thus this solution with semiconductor *B-integral* compensators is suitable only for several-hundred-picosecond or nanosecond pulses. In the solution of *D.D.Meyerhofer and O.A.Konoplev,* pulses were stretched up to 300 ps and 1 ns. The absolute value of the nonlinear refractive index of the semiconductor structure exceeded the nonlinear refractive index of the active medium of the amplifier. One pass through the *B-integral* compensator gave a sufficient amount of the negative nonlinear phase to compensate the *B-integral* accumulated in the regenerative amplifier during many passes. However, this solution of the nonlinear phase compensation was experimentally demonstrated only in the case of a relatively low value of *B-integral* - 1.6 rad was reduced down to 0.4 rad.

U.Roth et al., "Compensation of nonlinear self-focusing in high-power lasers," J. Quantum Electron. 36, pp. 687-691 (2000) describes the numerical simulation and experimental results of how laser beam self-focusing is compensated in a Nd:glass laser system using a GaAs thin-film semiconductor structure.

The low damage threshold of the semiconductor structure is the main drawback of the aforesaid solutions. The intensity value of 1 GW/cm$^2$ which is required for the nonlinear refractive index $n_2$ absolute value of GaAs to exceed that of Nd:YLF or Nd:glass is only slightly below the damage threshold. While, when the thickness of the structure is increased, the linear and nonlinear absorption losses increase significantly. Another disadvantage is that with a fixed thickness of the structure and the beam focusing parameters, there are no possibilities of adjustment of the amount of the compensating nonlinear phase. Finally, this method of compensation is not suitable for lasers of high average power due to thermal effects caused by the absorption of laser radiation.

There is also another option for compensation of the nonlinear phase. Due to cascaded nonlinear effects in phase-mismatched wavelength conversion configurations, e.g. second harmonic generation (SHG), radiation of a fundamental wavelength undergoes a phase shift. This phenomenon can be understood as the presence of an effective nonlinear refractive index because said phase shift depends on the light intensity. A quick explanation of what happens is as follows: when the SHG element is out of phase-matching configuration, the generation of the second harmonic radiation occurs highly inefficiently. Mismatching of group velocities very soon leads to a reverse phenomenon - the back conversion - energy transfer from the second harmonic wave to the fundamental wave. Then the generation of the second harmonic starts again, and so on. The energy exchange occurs several times and the result is a low SHG efficiency and an effective nonlinear refractive index for the fundamental wave, which can be both positive and negative depending on the detuning direction from the phase-matching configuration.

In case of a large phase-mismatching, when $|\Delta k|L \gg 2\pi$, where $L$ is a length of the SHG crystal, the effective nonlinear refractive index is proportional to a quadratic nonlinearity $d_{eff}$ of the SHG crystal and inversely proportional to a phase-mismatching parameter $\Delta k$:

$$n_2^{\text{eff}} \propto -\frac{d_{\text{eff}}^2}{\Delta k}, \qquad \text{where } \Delta k = k_{2\omega} - 2k_\omega.$$

This dependence does not hold close to the phase-matching position.

Close to phase-matching, when $|\Delta k|L \leq 2\pi$, the solution was experimentally demonstrated back in 1992 in R.DeSalvo et al., "Self-focusing and self-defocusing by cascaded second-order effects in KTP," Opt. Lett. 17, pp. 28-30 (1992), and the formula was written in M.Bache's doctoral thesis "Cascaded nonlinearities for ultrafast nonlinear optical science and applications" (2017; accepted by the Technical University of Denmark in 2018), p. 14. The formula can be written for the nonlinear phase only, but not for the nonlinear refractive index:

$$\Delta\Phi^{\text{eff}} \propto -[1 - \text{sinc}(\Delta k L)]\frac{d_{\text{eff}}^2}{\Delta k}.$$

European patent no. EP1153332 (D.N.Payne et al.; priority date: 1999-02-19) describes a method and an optical device for use in telecommunications, where optical amplifiers able to amplify the signal without distorting the spectral and temporal profile of the pulse are required. In a fiber amplifier, the self-phase modulation (SPM) is proportional to pulse intensity and the length of the active fiber, and one of the methods to reduce the intensity is to use a large-mode-area fiber in the amplifier. The main idea of the *D.N.Payne et al.* solution is to use a standard single-mode silica fiber or a planar amplifier (LiNbO$_3$ or silica-based), while to pre-compensate the temporal deterioration of radiation due to SPM with the effective $n_2$ in the phase-mismatched SHG element. The SHG element is a periodically poled LiNbO$_3$ (PPLN) crystal. Detuning from the phase-matching configuration is performed by changing the temperature of the crystal: decreasing the temperature results in a positive effective $n_2^{\text{eff}}$, and increasing the temperature results in a negative effective $n_2^{\text{eff}}$. The intensity of radiation is such that the amplifier operates in high population inversion utilization mode (high energy conversion efficiency mode). Compensation of the nonlinear phase is performed before amplification. The authors of said solution demonstrated that a 1.2 ps pulse achieves 1 kW peak power in the amplifier and accumulates $2.5\pi$ rad value of *B-integral* without pre-compensation; while using a 4 mm PPLN crystal and fixing a temperature at the level by 10°C higher than that required to satisfy the phase-matching for the SHG, it was possible to restore the temporal profile of the pulse and duration to initial values. Losses of radiation of the fundamental wavelength due to generation of the second harmonic (SH) radiation were approximately 20%. Other implementations are also contemplated wherein the SHG element is a periodically poled optical fiber; temperature tuning is done according to feedback-loop data, for example, by measuring the shape of the spectrum. An attenuator used between the SHG element and the amplifier opens up wider possibilities for precise adjustment of the negative $n_2$ and the positive $n_2$ of the optical system. The solution of *D.N.Payne et al.* is suitable for fiber-optical circuits used in telecommunications, but would not be applicable in high-energy ultrashort pulse solid-state laser systems. It is difficult to grow the PPLN crystal of large size and good quality for a laser beam with a large mode diameter. The damage threshold of PPLN crystals is at least one order of magnitude lower than that of bulk BBO or LBO crystals.

K.Beckwitt et al., "Compensation for self-focusing by use of cascade quadratic nonlinearity," Opt. Lett. 26, pp. 1696-1698 (2001) demonstrated compensation of self-focusing and spatial quality enhancement based on said effective negative nonlinear refractive index obtained in the phase-mismatched type-I second harmonic generation in BBO crystal. Femtosecond radiation from a Ti:sapphire regenerative amplifier with 150 fs-width pulse energy equal to 600 μJ, which already has a slight spatial intensity modulation, passes a 6 cm-long fused silica optical element. Operating at 23 GW/cm$^2$ conditions, the radiation in said fused silica optical element due to the positive nonlinear refractive index leads to the nonlinear phase of $1.1\pi$ rad, which manifests itself in that the initially small intensity modulation turn into sharp peaks. The 2.5 cm-long BBO crystal is used for compensation. The BBO material also has a positive nonlinear refractive index which is approximately equal to the nonlinear refractive index of the fused silica. Thus the total amount of the nonlinear phase to compensate equals approximately $1.65\pi$ rad. By spatially misaligning the BBO crystal (type-I interaction) from the phase-matching angle, full compensation of the accumulated nonlinear phase is achieved. While observing the transverse beam profile, it can be seen that the reduction of the beam diameter and the small-scale intensity modulation is avoided. With a further misalignment (rotation) of the BBO crystal from the phase-matching angle, overcompensation is observed: the beam diameter increases and small-scale intensity modulation becomes apparent again. The influence of the nonlinear phase and its compensation were also investigated in the time scale. 5 ps transform-limited (not chirped) pulses with an energy of 0.5 mJ acquire the nonlinear phase of $1\pi$ radians after a single pass through a 2 cm-long Ti:sapphire crystal. The radiation spectrum becomes broadened due to SPM by a factor of 3.2. A partial compensation of temporal self-phase modulation was achieved with a 1.7 cm-long phase-mismatched BBO crystal: the spectrum broadening was reduced from said factor of 3.2 to a factor of 1.5. The possibility to compensate the nonlinear phase after each pass in multi-pass amplifiers has also been theoretically considered.

J.P.Caumes et al., "Direct measurement of wave-front distortion induced during second-harmonic generation:

application to breakup-integral compensation", Opt. Lett. 29, pp. 899-901 (2004) investigated nonlinear phase compensation in phase-mismatched type-I second harmonic generation in the BBO crystal by monitoring the wave-front distortion of the laser beam with a Shack-Hartmann wave-front analyzer. When laser radiation with a pulse duration of 700 fs and a wavelength of 1.053 $\mu$m propagated through a 4 cm-long fused silica element, a nonlinear phase from 0.25 rad to 3 rad was registered within the intensity variation range from 2.5 GW/cm$^2$ to 40 GW/cm$^2$. With another SF57 glass element, a length of only 0.8 cm was sufficient to achieve a 3 rad limit of the nonlinear phase at the 20 GW/cm$^2$ radiation intensity level because the nonlinearity of SF57 is significantly higher than that of fused silica. The dependence of the nonlinear phase on the phase-mismatching parameter was also investigated for the BBO crystal, at 16 GW/cm$^2$ intensity level (pulse energy 120 $\mu$J) and at three times of that. Although no change in laser beam diameter has yet occurred under these conditions, the spatial distortion of the wave-front has been registered by the Shack-Hartmann analyzer. The nonlinear phase compensation of up to $2\pi$ rad (which has been accumulated in the fused silica element) with a 2 mm-long BBO crystal was demonstrated. Nonlinear phase compensation was possible in the intensity range from 10 GW/cm$^2$ to 100 GW/cm$^2$.

C.Dorrer et al., "Self-phase modulation compensation in a regenerative amplifier using cascaded second-order nonlinearities," Opt. Lett. 39, pp. 4466-4469 (2014) demonstrated the nonlinear phase compensation in the resonator of a regenerative amplifier. The main goal is to avoid spectral broadening and pulse lengthening. When a 12 ps pulse was amplified from 10 pJ to 2 mJ in a Nd:YLF regenerative amplifier without a compensator, the nonlinear phase of 6 rad (~$2\pi$) was accumulated during multiple passes which caused a strong broadening of radiation spectrum. The main contribution comes from the nonlinear refractive index of the DKDP Pockels cell. After inserting a 5 mm BBO crystal detuned from phase-matching position for type-I interaction, the spectrum was not broadened and the spatial laser beam profile remained similar to the resonator spatial mode. This indicates that the nonlinear phase has been compensated. Because of the compensation, a small pulse duration has been preserved resulting in up to 2 times amplification efficiency improvement in the power amplifier which follows the regenerative amplifier. The power amplifier attained the pulse energy of 75 mJ (7.5 GW/cm$^2$ intensity) without spatial and temporal distortions of radiation.

*I.Stasevičius and M.Vengris,* "Exploiting optical nonlinearities for group delay dispersion compensation in femtosecond optical parametric oscillators," Opt. Express 28, pp. 26122-26136 (2020) demonstrated the nonlinear phase compensation by cascaded nonlinear effects inside a femtosecond optical parametric oscillator. In one of the implementations, the source of the cascaded quadratic nonlinearity was a second harmonic generation (SHG) crystal (0.7 mm BBO, for type-I interaction), in another implementation - the optical parametric amplification (OPA) crystal itself (2.5 mm LBO, for type-I interaction). Both the SHG crystal and the OPA crystal operated under 20 GW/cm$^2$ intensity conditions. In the entire wavelength-tuning range of said optical parametric oscillator - from 770 nm to 790 nm - the pulse width smaller than 200 fs and high temporal quality were maintained (a product of the pulse width and the spectral width did not exceed 0.6), and the average power loss in the compensator did not exceed 20%.

A.L.Belostotsky et al., "Nonlinear phase change in type-II second-harmonic generation under exact phase-matched conditions," Opt. Lett. 19, pp. 856-858 (1994) described the possibility of yielding the nonlinear phase during SHG in type-II interaction (fundamental radiation has two perpendicular polarization components, i.e. o and e polarizations). When the amplitudes of the perpendicular polarization components are unequal, the periodic energy exchange between fundamental and SH radiations takes place even in the phase-matching configuration. As soon as the lower-amplitude polarization component of the fundamental wave is depleted, back-conversion begins, and the newly generated fundamental wave undergoes a phase shift of $\pi$ radians. When the second harmonic is depleted, the process begins from the beginning. Each time the amplitude of the weaker polarization component of the fundamental wave or of the second harmonic wave drops to zero and starts to be generated again, their phase shifts by $\pi$ radians. A modeling performed for a KTP second harmonic generation crystal at 1.064 $\mu$m under power density conditions of <0.2 GW/cm$^2$ shows:

1) for a 1:0.7 amplitude ratio of fundamental wave polarization components, a $2\pi$ rad phase change can be achieved at the SHG crystal length >0.9 cm;
2) for a 1:0.5 amplitude ratio - the $2\pi$ rad phase change can be achieved at about 0.8 cm length of the SHG crystal. Thus, when operating in the phase-matching configuration, the periodicity of the back-conversion and the nonlinear phase change achieved at a given length (which is $\pi$, $2\pi$, etc.) depends on the ratio of the amplitudes.

Type-II second harmonic generation under phase-mismatching conditions was also modeled. When the second harmonic generation crystal KTP is detuned from phase-matching, the phase of the lower-amplitude polarization component of the fundamental wave shifts by less than $\pi$, and it changes smoothly. The fundamental wave does not manage to accumulate $2\pi$ radians of the total nonlinear phase within a 1 cm length of the nonlinear crystal. On the other hand, the periodicity of the energy exchange also depends on the magnitude of detuning from phase-matching, thus there is an additional possibility for fine adjustment of the amount of the phase change. For type-II interaction, it should be remembered that the o and e polarization components have different linear refractive indices, so a phase shift between the polarization components of the fundamental wave will occur in a long crystal just because of propagation in the crystal. A long type-II SHG crystal will act as a phase plate. This was not considered in the simulation of *A.L.Belostotsky et al.* In addition, the KTP crystal has a low damage threshold, at least 5 times lower than other SHG crystals used in high-energy laser systems: BBO, BIBO, LBO, or CLBO. The KTP crystal is not a proper choice in ultrashort pulse laser systems operating at intensities above 20 GW/cm$^2$.

The closest prior art are all solutions in which the nonlinear phase compensation is performed by the means of cascaded quadratic nonlinear interactions under high-intensity conditions and in which a positive *B-integral* of at least $2\pi$ radians must be compensated. However, neither of the known solutions achieves >200 mJ energy of picosecond pulses at 20 W/cm$^2$ power density conditions, while at the same time ensuring high spatial and temporal quality of radiation so that the residual *B-integral* does not exceed $\pi$.

TECHNICAL PROBLEM TO BE SOLVED

The aim of this invention is:

- to compensate with a bulk crystal of quadratic nonlinearity, in which cascaded nonlinear phenomena take place, the nonlinear phase accumulated in the laser system exceeding $2\pi$ radians;
- to find conditions required to compensate the nonlinear phase of the laser system when intensity in any of its optical elements is above 20 GW/cm$^2$;
- to amplify laser pulses of duration from 5 ps to 100 ps, preferably from 10 ps to 20 ps, up to the energy of at least 200 mJ, preferably up to 500 mJ, in certain cases up to 1 J,
- to ensure the high spatial and temporal quality of radiation so that said radiation is suitable for pumping a multi-stage optical parametric chirped pulse amplification (OPCPA) system, and at the same time to ensure an economically reasonable system price;
- to use an active medium of a smaller diameter because of better utilization efficiency (up to 15% during one pass) of the population inversion stored in the active medium;
- to implement the operation of a high-energy and high-intensity ultrashort pulse amplifier at gain saturation regime.

DISCLOSURE OF THE INVENTION

According to the proposed invention there is provided an efficient high-intensity laser system comprising a circuit of optical elements in which a quantum laser amplifier is arranged containing at least one gain element and at least one nonlinear phase compensation element, wherein

- a nonlinear refractive index $n_2$ of said at least one gain element is of a positive sign, and a nonlinear refractive index $n_2$ of said at least one nonlinear phase compensation element is of a negative sign, wherein
- said at least one nonlinear phase compensation element is an optical element with a quadratic nonlinearity in which cascaded nonlinear effects take place, wherein
- said at least one gain element is configured and is pumped so that the input radiation is amplified, thus obtaining a pulse energy of an output radiation of at least 200 mJ,
- said at least one nonlinear phase compensation element is configured so that an absolute value of the total negative nonlinear phase yielded in said at least one nonlinear phase compensation element is from $\pi$ to $6\pi$ radians,
- a residual amount of the nonlinear phase at the output radiation, expressed by the value of the *B-integral,* does not exceed $\pi$ radians, and a ratio of spectral widths of said output radiation and said input radiation does not exceed 3.

Durations of pulses of the input radiation entering the laser system and the output radiation exiting the laser system is in the range from 5 ps to 100 ps.

Intensity at least in one of the optical elements constituting the laser system exceeds the value of 20 GW/cm$^2$.

Said at least one gain element is two isotropic active media, and the optical elements of the laser system are connected into the optical circuit in such a way that the laser radiation through said two isotropic active media and through said at least one nonlinear phase compensation element propagates once. An amplification factor of each of said two isotropic active media is in the range from 1 to 10 times, and utilization efficiency of the population inversion is not less than 15% in each of said two isotropic active media.

Said at least one gain element is one isotropic active medium, and the optical elements of the laser system are connected into the optical circuit in such a way that the laser radiation through said one isotropic active medium and through said at least one nonlinear phase compensation element propagates twice. During each pass through said one isotropic active medium, an amplification factor is in the range from 1 to 10 times, and an overall utilization efficiency of the population inversion during the two passes of radiation is not less than 30%.

The radiation propagating through said at least one gain element is a linearly polarized laser radiation or a circularly polarized laser radiation.

According to a preferred embodiment of the present invention,

- the radiation propagating through said at least one nonlinear phase compensation element is a linearly polarized laser radiation, and
- said at least one nonlinear phase compensation element is a crystal of type-I second harmonic generation or a sequence of crystals of type-I second harmonic generation,
- the negative nonlinear refractive index $n_2$ is obtained by realizing the second harmonic generation-under phase-mismatching conditions.

According to a separate preferred embodiment of the present invention,

- said at least one nonlinear phase compensation element is a sequence of two crystals of second harmonic generation, wherein
- during the first pass, the radiation propagating through said two crystals of second harmonic generation is of a first linear polarization state,
- during the second pass, the radiation propagating through said two crystals of second harmonic generation is of a second linear polarization state, perpendicular to the first linear polarization state,
- the first crystal of second harmonic generation is configured and integrated into the optical circuit in such a way that said phase-mismatching conditions are realized by rotating the crystal from a phase-matching angle in a plane which is the plane of phase-matching for the first linear polarization state, therefore the first crystal compensates the amount of a nonlinear phase accumulated during the first pass through all optical elements of the laser system,
- the second crystal of second harmonic generation is configured and integrated into the optical circuit in such a way that said phase-mismatching conditions are realized by rotating the crystal from a phase-matching angle in a plane which is the plane of phase-matching for the second linear polarization state, therefore the second crystal compensates the amount of a nonlinear phase accumulated during the second pass through all the optical elements of the laser system.

According to another separate preferred embodiment of the present invention, said at least one nonlinear phase compensation element is a sequence of two crystals of type-I second harmonic generation, where the first crystal and the second crystal are configured so that said phase-mismatching conditions are realized by changing a temperature of the crystals.

According to another embodiment of the present invention,

- radiation propagating through said at least one nonlinear phase compensation element is a linearly polarized laser radiation, and
- said at least one nonlinear phase compensation element is a crystal of type-II second harmonic generation principal axes of which are rotated by an angle $\beta$ with respect to the polarization direction of said linearly polarized laser radiation, and
- the negative nonlinear refractive index $n_2$ is obtained by realizing the second harmonic generation:

    - - under phase-mismatching conditions, if the angle $\beta$ is equal to 45 degrees, or
    - - under phase-matching or under phase-mismatching conditions, if the angle $\beta$ is not equal to 45 degrees.

According to yet another embodiment of the present invention,

- the radiation propagating through said at least one nonlinear phase compensation element is a linearly polarized laser radiation, and
- said at least one nonlinear phase compensation element is a sequence of type-I second harmonic generation crystals and/or a type-II second harmonic generation crystal, accomplishing cascaded nonlinear effects and obtaining the negative nonlinear phase.

According to an alternative embodiment of the present invention,

- the radiation propagating through said at least one nonlinear phase compensation element is a circularly polarized laser radiation, and
- said at least one nonlinear phase compensation element is one crystal or a sequence of crystals of type-II second harmonic generation,
- the negative nonlinear refractive index $n_2$ is obtained by realizing the second harmonic generation under phase-matching or under phase-mismatching conditions.

The nonlinear phase compensation elements are selected from the following list of the second harmonic generation crystals: BBO, BIBO, LBO, or CLBO.

In the output radiation, the pulse energy is at least 1 J and a residual amount of the nonlinear phase, expressed by the value of the *B-integral,* does not exceed 1 radian.

The losses due to the second harmonic generation in said at least one nonlinear phase compensation element do not exceed 5%.

ADVANTAGES OF THE INVENTION

The advantages of the nonlinear phase compensation in a narrowband active medium amplifier by the means of phase-mismatched SHG are these:

- the effective nonlinear refractive index $n_2^{\text{eff}}$ is almost the same within the amplification band of the amplifier,
- detuning of the SHG crystal or crystals out of phase-matching position allows for fine adjustment of the effective nonlinear refractive index,
- in a double-pass system, the nonlinear phase acquired during the first and second pass can be compensated separately,
- BBO and other SHG borate crystals have a high damage threshold and at the same time a high effective nonlinearity, which allows them to be used in high-energy and high-intensity systems for the nonlinear phase compensation. With two said crystals of a standard size, it is possible to compensate the *B-integral* of up to $6\pi$ radians and to achieve the energy of picosecond pulses of 1 J.

BRIEF DESCRIPTION OF THE DRAWINGS

Fig. 1 - an embodiment of the laser system of this invention with one active medium.
Fig.2 - a preferable embodiment of the laser system of this invention.
Fig.3 - an embodiment of the laser system of this invention with two active media.
Fig.4 - a typical dependence of the effective nonlinear phase on a phase-mismatching parameter *Δk* in a nonlinear media of quadratic nonlinearity.
Figs.5, 6, 7 - other embodiments of the laser system of this invention.

THE BEST IMPLEMENTATION OPTIONS OF THIS INVENTION

The laser system is implemented as a two-pass quantum amplifier, in which: 1 - an input laser radiation; 2 - a polarizer that transmits radiation of horizontal (H) linear polarization and reflects radiation of vertical (V) linear polarization; 3 - an active medium, for example, Nd:YAG crystal; 4a, 4b - type-I second harmonic generation (SHG) crystals for yielding an effective nonlinear refractive index; 5 - a quarter-wave plate for the fundamental wavelength, the waveplate is oriented so that its optical axis makes an angle of 45 degrees with a direction of said H polarization of the incident radiation; 6 - a mirror with a high reflection coefficient for the fundamental wavelength, which is amplified by said active medium; 7 - output radiation.

The aforesaid SHG crystals 4a, 4b are mounted to be rotatable: the first SHG crystal 4a is rotated in a plane which is the plane of phase-matching for H polarization; the second crystal 4b is rotated in a plane which is the plane of phase-matching for V polarization. Crystals 4a, 4b are cut and initially oriented for type-I second harmonic generation. The active medium 3 amplifies the input radiation 1 of H polarization which has been transmitted through the polarizer 2. The quarter-wave plate 5 and the mirror 6 are used to accomplish the second pass in said optical circuit and to output the radiation from the amplifier after reflection from the polarizer 2. The waveplate 5 converts the linear horizontal (H) polarization into circular polarization, and after reflection from the mirror 6 and after the second pass through the waveplate 5, the polarization turns into the linear vertical (V) polarization perpendicular to the input polarization.

Many active media have a positive nonlinear refractive index, thus an element with a negative effective refractive index is needed to compensate the nonlinear phase change. In our system, the phase-mismatched SHG crystals are used as compensators. The sign of the effective refractive index of the SHG crystal depends on the detuning direction from the phase-matching configuration. In angular tuning, it depends on the rotation angle of the SHG crystal from the phase-matching angle.

When the H polarization radiation after being amplified in the active medium 3 of the amplifier passes through the SHG crystals 4a, 4b for the first time, it experiences: in the first crystal 4a, a sum effect on the phase from the positive nonlinear refractive index $n_2^{\mathrm{m}}$ of the crystal material and from the negative effective $n_2^{\mathrm{eff}}$ due to phase-mismatched second harmonic generation, while in the second crystal 4b, the radiation is only affected by the positive nonlinear refractive index of the crystal material. The detuning of the first crystal 4a from the phase-matching is chosen to compensate the total accumulated positive nonlinear phase during the first pass through the active medium 3 and through both SHG crystals 4a, 4b.

After reflection from the mirror 6 and passage through the waveplate 5 for the second time, the polarization of radiation is converted to linear vertical (V). The actions of the SHG crystals interchange during the second pass: the V-polarized radiation accumulates the positive nonlinear phase due to material properties and the negative nonlinear phase due to the phase-mismatched second harmonic generation in the second SHG crystal 4b, while in the first SHG crystal 4a - only the positive nonlinear phase due to the material properties. The detuning of the second crystal 4b from the phase-matching and the crystal length are chosen so that the negative nonlinear phase compensates the total accumulated positive nonlinear phase of both SHG crystals 4a and pre-compensates the nonlinear phase which the radiation will acquire during propagation through the active medium 3, i.e., compensation of nonlinear effects in the active medium 3 is performed in advance, thus it can be called pre-compensation. This avoids the dangerous beam focusing of the laser beam on the second pass through the active medium 3.

Since the V polarization is perpendicular to the initial H polarization, the radiation 7 is reflected from the polarizer 2 and exits the amplification system by a different path than the input radiation 1. In the case of an ideal compensation of the accumulated nonlinear phase, the output radiation 7 is characterized by high spatial and temporal radiation quality. In case of partial compensation, but with a value of the residual accumulated nonlinear phase less than 3 rad ($<\pi$ rad), the effect of the nonlinear refractive index on the spectral, temporal, and spatial properties of radiation is still considered safe. This reduces the requirements for compensation accuracy and allows the laser system to be operated within a certain range of output energies without adjusting parameter of the compensator.

Without compensation of the nonlinear phase, in a high-intensity laser system with power density (intensity) exceeding 20 GW/cm$^2$ and in which pulses are amplified to energies of the order of ~100 mJ and more, the accumulated nonlinear phase exceeds $2\pi$ rad value at two passes even with laser beam diameter larger than 10 mm. 10 mm is an optimum practical diameter of optical elements. The nonlinear phase larger than $2\pi$ radians can be compensated only by introducing a large negative nonlinear phase - SHG crystals 4a, 4b, or one long SHG crystal of proper lengths. The BBO crystal is suitable for implementing this solution because it has high effective nonlinearity $d_{\mathrm{eff}}$, which allows to attain a high value of the effective nonlinear refractive index $n_2^{\mathrm{eff}}$. Due to the technological limitations of the crystal growth of BBO their length can not be greater than 25 mm. The use of two crystals allows us to bypass this limitation.

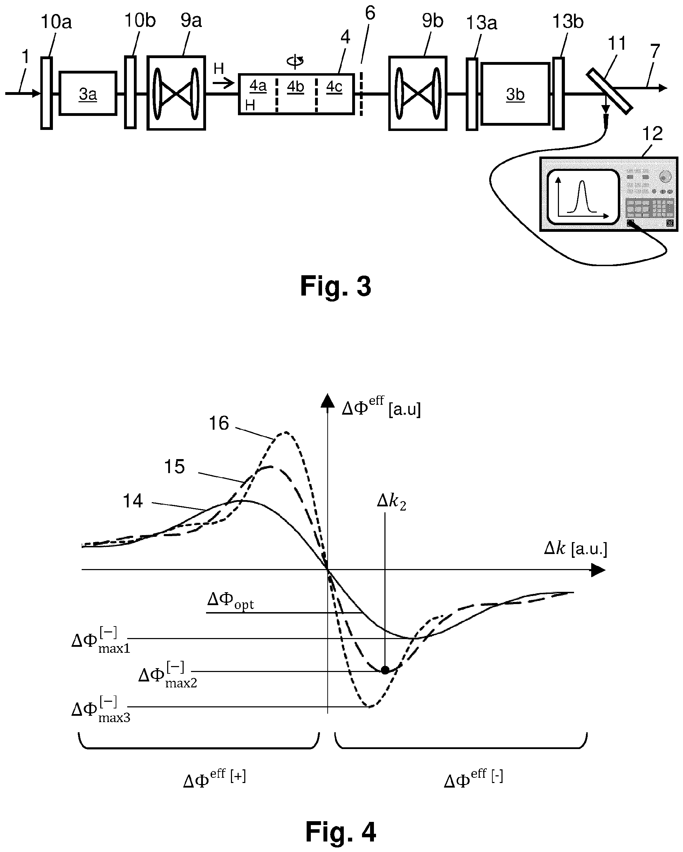

The maximum values of the effective nonlinear refractive index are obtained close to the phase-matching angle (Fig.4), thus the compensation of the nonlinear phase is accompanied by losses related to generation of the second harmonic radiation. As an indication of the regime in which the SHG generation takes place, one could measure the energy of the SH radiation in the direction 8 behind the mirror 6 which is transparent to the SH radiation. From the measurement of the SHG efficiency, it is possible to judge about detuning from the phase-matching configuration and remember parameters (angle or temperature) for exact phase-matching. However, a more practical method for evaluation of an extent of the nonlinear phase compensation is to observe changes in the temporal, spectral or spatial properties of the laser beam. The effect on spatial properties is less obvious and depends on the initial beam divergence and beam size. Whereas the spectral width unambiguously reflects how well the accumulated nonlinear phase is compensated. In the case of ideal compensation, the spectral width of the output radiation 7 should be the same as the spectral width of the input radiation 1. In a real implementation, the positions of the SHG crystals 4a, 4b for the best possible compensation are those where the narrowest output radiation spectrum 7 is obtained. In the proposed laser system, we use two SHG crystals, wherein the first crystal is destined to compensate the nonlinear phase acquired at the first pass, and the second crystal is destined to compensate the nonlinear phase acquired at the second pass. Therefore, the observation of the spectral width for evaluating the nonlinear phase compensation quality can be performed for each pass separately: after the first pass - in the direction 8, after the second pass - on the way of the output radiation 7.

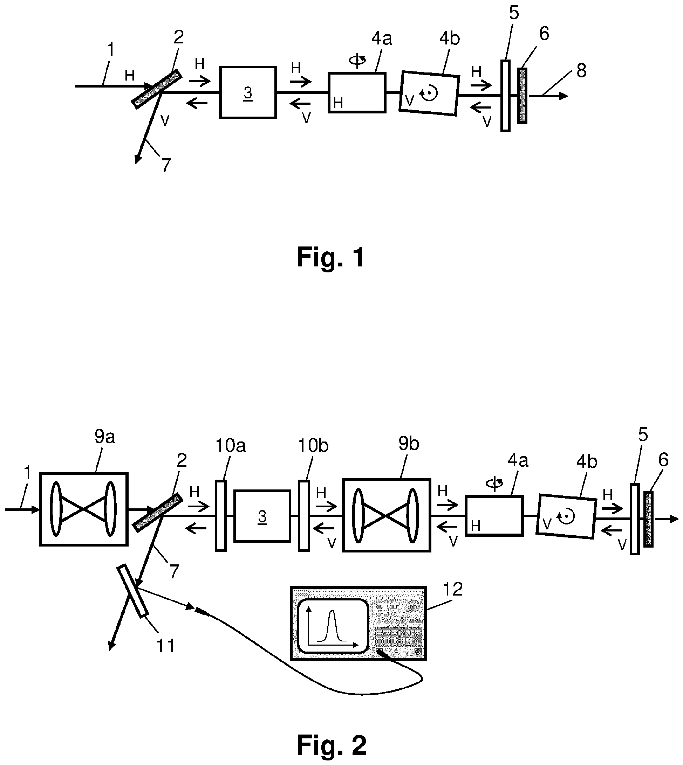

Fig.2 shows a preferred embodiment of the laser system of the present invention. It also uses a single active medium 3. The optical circuit is supplemented by the following elements: image relay telescopes 9a and 9b and quarter-wave plates 10a, 10b. In order to use the inversion of the active medium 3 as efficiently as possible, especially in side-pumped high power systems where population inversion is distributed throughout the whole volume of the active medium, the laser beam should have a flat-top or super-gaussian shaped intensity profile. However, such a beam diffracts very quickly - it does not maintain the spatial distribution and can form high-intensity spots which can damage any element of the system. Image relay systems allow to transfer the formed intensity distribution (image) of the laser beam to distant positions in the system. The first telescope 9a transfers the image to the active medium 3 from an active medium of the previous stage of the system. The second telescope 9b transfers the image from the active medium 3 onto the end mirror 6 (the image of the beam is formed in the plane of the mirror 6) and back to the active medium 3. It would be possible to place the SHG crystals 4a and 4b close to the plane of the image of the beam relayed by the telescope 9b from the active medium 3 if another telescope between the telescope 9b and the mirror 6 or between the waveplate 5 and the mirror 6 would be used.

It is known that a lower value of *B-integral* is acquired for a circularly polarized beam propagating in a medium as compared to a linearly polarized beam. Thus, the quarter-wavelength phase plates 10a and 10b are necessary in order the circularly polarized radiation would propagate through the active medium 3, and the linearly polarized radiation - through other elements of the system. This is the means to accumulate less nonlinear phase in the active medium. The solution is suitable for an isotropic active medium such as Nd:YAG. In this case, nonlinear phase compensators - the SHG crystals 4a, 4b - will have to compensate a smaller amount of the nonlinear phase. After separating a part of the output radiation 7 with a beam splitter 11, changes in the spectral width are observed with a spectrometer 12. When the spectrum is the narrowest, the compensation is the best.

During the assembly and adjustment of the laser system, the spectrum can be observed in the beam path between elements 4b and 5 or between elements 5 and 6, or behind the mirror 6. The spectral width is measured when adjusting the first SHG crystal 4a.

If initially the SHG crystal 4a is at the phase-matching position (SH radiation energy is the highest possible), the spectrum is broadened as much as it is caused by the positive material nonlinear phase due to the first pass through the active medium 3 and other elements of the system. For the weaker pumping, the spectral broadening will be smaller; for the stronger pumping, the spectral broadening will be larger. By detuning the SHG crystal 4a out of phase-matching, either broadening or narrowing of the spectrum is observed with the spectrometer. The narrowest spectrum indicates the best compensation of the nonlinear phase related to the first pass through the system.

It is advisable to remember initial parameters - phase-matching position (angle and temperature) and which direction of parameter changes result in spectral broadening and narrowing - at low pump levels. Because, at high radiation energy levels, there is a risk of damaging the optical elements because of beam self-focusing if the SHG crystal 4a is detuned out of phase-matching into the wrong direction - where the effective nonlinear refractive index is positive, and the SHG crystal does not reduce but increases the total nonlinear phase of the system. The maximum value of the effective nonlinear refractive index $n_2^{\text{eff}}$, both negative and positive, is achieved in position close to phase-matching. After finding out in which tuning direction the SHG crystal 4a acts as a compensator, after turning on a full pump power, one should detune the crystal only to that direction.

The second SHG crystal 4b is adjusted when the retroreflecting mirror 6 is present in the system and observing the spectral width on a path of the output radiation 7 (after the second pass in the active medium) as shown in Fig.2. In this case, even greater care must be taken during the adjustment of the crystal so that, at full pump level, the crystal 4b is detuned out of phase-matching only to that direction where it acts as a compensator but not as a source of an additional positive phase.

Instead of the waveplate 5, a 45-degrees Faraday rotator can be used, but a material of the Faraday rotator would introduce an additional amount of the positive nonlinear phase, which will need to be compensated by the SHG crystals 4a, 4b.

Fig.3 is yet another embodiment of the laser system of the present invention. Here, two amplification events take place too, however, two distinct active media 3a and 3b are used through which laser radiation propagates once. Geometrical and pumping parameters of the active media 3a, 3b may mutually differ. The phase change caused by the positive nonlinear refractive index of the active media 3a, 3b is compensated by the type-I SHG crystal 4, detuned from phase-matching. The crystal 4 makes an overcompensation: it compensates the nonlinear phase accumulated in the active medium 3a and pre-compensates the nonlinear phase that will add up in the active medium 3b. Several SHG crystals 4a, 4b, 4c can be used to acquire a larger amount of the compensating nonlinear phase. Quarter-wave plates 13a, 13b are also placed on both sides of the second active medium 3b so that the circularly polarized beam propagates through the active medium thus reducing accumulation of the nonlinear phase. It is advisable to use two telescopes 9a, 9b: to relay the image from the medium 3 to the SHG crystal 4 (or one of the crystals 4a, 4b, 4c, if there are several ones) and from the crystal 4 to the medium 3b. A separator can be inserted behind the SHG crystal 4 to separate the second harmonic radiation. After separating a part of the radiation of the fundamental wavelength by the beam splitter 11 on the path of the output radiation 7 and measuring its spectral width, the best second harmonic generation regime for nonlinear phase compensation is chosen.

In Fig.4, a typical dependence of $\Delta\Phi^{\text{eff}}$ on phase-mismatching parameter $\Delta k$ is shown. In the case of angular tuning, the relationship between the rotation angle of the crystal and the $\Delta k$ depends on a spatial distribution of the crystal refractive indices for the fundamental and second harmonic wavelengths. Detuning from phase-matching configuration can also be achieved by changing the temperature of the crystal. The positive effective nonlinear phase $\Delta\Phi^{\text{eff }[+]}$ is realized when $\Delta k<0$, and the negative effective nonlinear phase $\Delta\Phi^{\text{eff }[-]}$ - when $\Delta k>0$.

Curves 14, 15, 16 are given for illustration purposes only and are calculated from the relation

$$\Delta\Phi^{eff} \propto -[1 - \mathrm{sinc}(\Delta kL)]\frac{d_{eff}^2}{\Delta k}$$ by choosing the same $d_{eff}$ value and three different crystal lengths: length L for the curve 14, length 1.5L for the curve 15, and length 2L for the curve 16. The maximum value of $\Delta\Phi^{eff}$ is attained at a certain position, which is close to the phase-matching position (close to $\Delta k = 0$), and which depends on the crystal length. For example, the maximum negative value of the nonlinear phase $\Delta\Phi_{max2}^{[-]}$ of the curve 15 is obtained at the phase-mismatching parameter $\Delta k_2$. Since the maximum achievable phase value also depends on the length of the crystal, to have a particularly large amount of the nonlinear phase, it may be necessary to use the crystal which is as long as possible, or to use several crystals. On the other hand, if the crystal length is sufficient, it is only necessary to find the optimal phase-mismatching parameter by temperature or angular tuning. If the maximum achievable nonlinear phase is not required, then there are two phase-mismatching positions, and it is better to choose the one where the phase-matching parameter $\Delta k$ is larger in order the conversion efficiency to the SH radiation is lower. At larger detuning from the phase-matching position, losses due to SHG decrease. It is worth noting that if the effective quadratic nonlinearity $d_{eff}$ of the crystal is large (as that of BBO, LBO, BIBO, CLBO, etc. crystals), the required value of the nonlinear phase $\Delta\Phi_{opt}$ can be obtained with many crystal lengths: L, and 1.5L, and 2L, and nL. Selecting a shorter crystal will make the phase value less sensitive to the mismatching parameter.

A proposed adjustment procedure No.1 (see the scheme of Fig.2):

(1) Arrange elements 9a, 2, 10a, 3, 10b, 9b, 4a, 4b, 5, and 6 without signal amplification. Remove the mirror 6.
(2) Keep the input signal at the smallest detectable level so that the amplified signal is as weak as possible during the adjustment of the system.
(3) Measure the energy of the second harmonic radiation and the spectral width of the fundamental radiation behind the element 5.
(4) Adjust the SHG crystal 4a so that the most effective SHG occurs. Remember the parameters (angle and/or temperature) of the crystal 4a - this is the phase-matching position. If the second harmonic generation does not occur, increase the signal and repeat the step (4).
(5) Detune the crystal 4a from phase-matching (change angle or temperature) by a small amount. Observe in which direction of said detuning from phase-matching the spectrum of the fundamental radiation becomes broader, and in which direction becomes narrower.
(6) If the broadening or narrowing of the spectrum cannot be observed, that means that the signal level is too low and the positive material nonlinear phase of all system elements is small enough and there is nothing to compensate. Increase the level of the input signal slightly and repeat the steps from (5).
(7) Detuning direction from the phase-matching position of the crystal 4a, where the radiation spectrum becomes broader, corresponds to the positive effective nonlinear phase $\Delta\Phi^{eff\,[+]}$ region. Detuning direction from the phase-matching position of the crystal 4a, where the radiation spectrum becomes narrower, corresponds to the negative effective nonlinear phase $\Delta\Phi^{eff\,[-]}$ region. Compensation is performed by detuning to the negative effective nonlinear phase region.
(8) Return to the phase-matching position.
(9) Increase the level of the input signal. Observe how the fundamental radiation spectrum becomes narrower during detuning of the crystal 4a from the phase-matching position in the direction of the negative nonlinear phase. Find the value of the phase-mismatching parameter $\Delta k$ where the narrowest radiation spectrum is achieved (further detuning begins to broaden the spectrum again). It is $\Delta\Phi_{opt}$ (see Fig.4) for that signal level. Repeat step (9) increasing the signal level to the destined gain level and remember the parameters, e.g. the rotation angle of the crystal 4a, hereafter referred to as an optimal phase-mismatching configuration at the destined gain level of the first pass, where the value of the compensating negative nonlinear phase $\Delta\Phi_{opt}$ is optimal for the first pass.
(10) Reduce the level of the input signal.
(11) Put the mirror 6 back into the optical circuit, place the energy meter of the second harmonic radiation and the spectrometer 12 onto the path of the output radiation 7 for measurement (on a reflection path from the beam splitter 11).
(12) Adjust parameters of the second SHG crystal 4b until the largest AH radiation energy is obtained. Remember the parameters (angle and/or temperature) of the crystal 4b - this is the phase-matching position for the second crystal 4b.
(13) Detune the crystal 4b from phase-matching (change angle or temperature) by a small amount. Observe in which direction of said detuning from phase-matching the spectrum of the fundamental radiation becomes broader, and in which direction becomes narrower. Remember the detuning direction of the crystal 4b, in which the radiation spectrum becomes narrower.

(14) Return to the phase-matching position.

(15) Increase the level of the input signal. Observe changes in the spectral width during detuning of the crystal 4b in the direction of spectral narrowing.

(16) Find an optimal phase-mismatching configuration for the second crystal 4b in the same way that the optimal phase-mismatching configuration for the first crystal 4a has been found in step (9). As long as the level of the amplified signal is lower than the intended level, the first crystal 4a introduces a non-optimal compensating negative phase, hence the optimal configuration of the second crystal 4b cannot be found. However, by increasing the signal level in small steps, the approximate phase-mismatching of the crystal 4b can be found.

(17) After increasing the input signal to a intended level (to obtain a predetermined output power of the amplifier), the final phase-mismatching configuration of the second crystal 4b is found, where the radiation spectrum is narrowest.

This is how the optimal compensating negative nonlinear phase $\Delta\Phi_{opt}$ for the second pass and the whole optical system is found.

A proposed adjustment procedure No.2 (see the scheme of Fig.2):

(1) Arrange the elements 9a, 2, 10a, 3, 10b, 9b, 5.

(2) Turn the pumping for the active medium 3 on. Measure the spectral width behind the element 5. Remember the value of the spectral width $\Delta\lambda_{min}$ at the low pump level.

(3) Insert the SHG crystals 4a, 4b.

(4) Set such a level of pumping for the active medium 3 at which generation of the second harmonic begins in the crystal 4a.

(5) Adjust the SHG crystal 4a so that the most effective SHG occurs. Remember the parameters (angle and/or temperature) of the crystal 4a - this is the phase-matching position.

(6) If the spectrum of the fundamental radiation is not broader than $\Delta\lambda_{min}$ this means that the pump level is too low and the positive material nonlinear phase of all system elements has not yet appeared. It is necessary to increase the pumping to such a level that the radiation spectrum becomes broader than $\Delta\lambda_{min}$.

(7) Detune the crystal the crystal 4a from phase-matching (change angle or temperature) by a small amount. Observe in which direction of said detuning from phase-matching the spectrum of the fundamental radiation becomes broader, and in which direction becomes narrower. Remember in which direction of said detuning from phase-matching the spectrum of the fundamental radiation becomes narrower.

(8) Detuning direction of the crystal 4a, where the radiation spectrum becomes broader, corresponds to the positive effective nonlinear phase $\Delta\Phi^{eff\,[+]}$ region. Detuning direction of the crystal 4a, where the radiation spectrum becomes narrower, corresponds to the negative effective nonlinear phase region. Phase compensation is performed by detuning the SHG crystal 4a from the phase-matching position to the negative phase region.

(9) Return to the phase-matching position.

(10) Increase the pump level. Measure the spectral width when detuning the crystal 4b in the direction of spectral narrowing. At the detuning where the spectrum becomes equal to $\Delta\lambda_{min}$ or where a certain minimum of the spectral width is achieved (after which the spectrum begins to broaden again), the optimal compensating negative nonlinear phase is found. Repeat the step (10) when increasing the pumping level to the destined level. Remember the parameters, e.g. the rotation angle of the crystal 4a (hereafter referred to as optimal phase-mismatching configuration) at the destined gain level of the first pass, where the value of the compensating negative nonlinear phase $\Delta\Phi_{opt}$ (see Fig.4) is optimal for the first pass.

(11) Similarly, find the optimal compensating negative nonlinear phase $\Delta\Phi_{opt}$ in the second crystal 4b for the second pass.

A long-term exploitation of the system is sensitive to the pointing stability of the laser beam which is amplified. An automated beam direction monitoring and correction system can be introduced. For example, it may consist of two photodetectors and motorized adjustment nodes, and a processor which - according to a certain algorithm - through motorized adjustment nodes ensures stability of the direction of the amplified beam.

An example. Simulation results will be presented to determine parameters of the SHG crystals needed for the system implementation according to Fig.2 to amplify the picosecond radiation up to approx. 1 J of energy. In addition to the main goal - to amplify radiation, an additional task is to ensure high spatial and temporal quality. Only by ensuring high spatial and temporal quality, one can avoid spatial distortions of the laser beam and element damage, and have high amplification efficiency, which will allow one to attain 1 J-level energy. We determine that the positive nonlinear phase (B-

*integral*) in the SHG crystals 4a, 4b due to material nonlinear refractive index does not exceed 2 rad during one pass. Parameters:

- a beam of laser radiation 1 with a wavelength of 1064 nm entering the laser system has a flat-top intensity distribution;
- a pulse duration equals 20 ps;
- a length of a Nd:YAG active medium 3 equals 130 mm;
- a circularly polarized radiation propagates through the active medium.

The result: by making with the image relay telescope 9a a beam waist of 19.6 mm diameter in the active medium 3, and by inputting a picosecond pulse of 120 mJ energy into the active medium 3, 1 J energy at the output of the amplifier is achieved, which meets the specified requirements for spatial and temporal properties of radiation. The total loss of two passes through all system elements is equal to about 15% (including 3-5% loss due to generation of SH radiation in crystals 4a, 4b). The pulse is amplified to approx. 500 mJ at one pass in the active medium 3. The largest power density in the active medium during the first pass is 9.7 GW/cm$^2$. The beam is image-relayed by the telescope 9b to the type-I BBO SHG crystal 4a. In BBO crystals, detuning from phase-matching for SHG is accomplished by changing the angle of radiation incident to the crystal, i.e. by rotating the crystal relative to the laser beam. The telescope 9b reduces the diameter of the beam to about 11 mm. The material positive nonlinear phase of BBO crystals does not exceed 2 rad if the length of the SHG crystals 4a, 4b is 8.9 mm. High power density (approx. 40 GW/cm$^2$) ensures that cascaded nonlinear phenomena take place efficiently in the SHG crystals 4a, 4b. In order with the 8.9 mm-long crystal to compensate the total positive nonlinear phase acquired during the first pass through the system, the first BBO crystal 4a needs to be rotated by 0.4 degrees from phase-matching position (the phase-mismatching parameter in the BBO crystal $\Delta k$ = 13.6 mm$^{-1}$). The power density in the active medium at the end of the second pass is 22.7 GW/cm$^2$. The total positive nonlinear phase of all system elements (and the SHG crystals themselves) which must be compensated equals 17.8 rad. If the negative nonlinear phase of the second crystal 4b is insufficient to compensate the nonlinear phase acquired during the second pass through the system, the complete phase compensation can be achieved by the action of both crystals. Note: additional system elements such as waveplates 10a, 10b, 13a, 13b, lenses in telescopes 9a, 9b, windows of vacuum cuvettes (if used) also contribute to about 0.1-0.3 rad of positive *B-integral* per single pass, which could be compensated by additional phase-mismatching of the first SHG crystal 4a. The quality of the compensation is evaluated from the spectral width after two passes, at the output of the system. Up to $\pi$ rad residual amount of the accumulated nonlinear phase is tolerated. After amplification, accounting all system losses, picosecond pulses of about 1 J in energy are obtained.

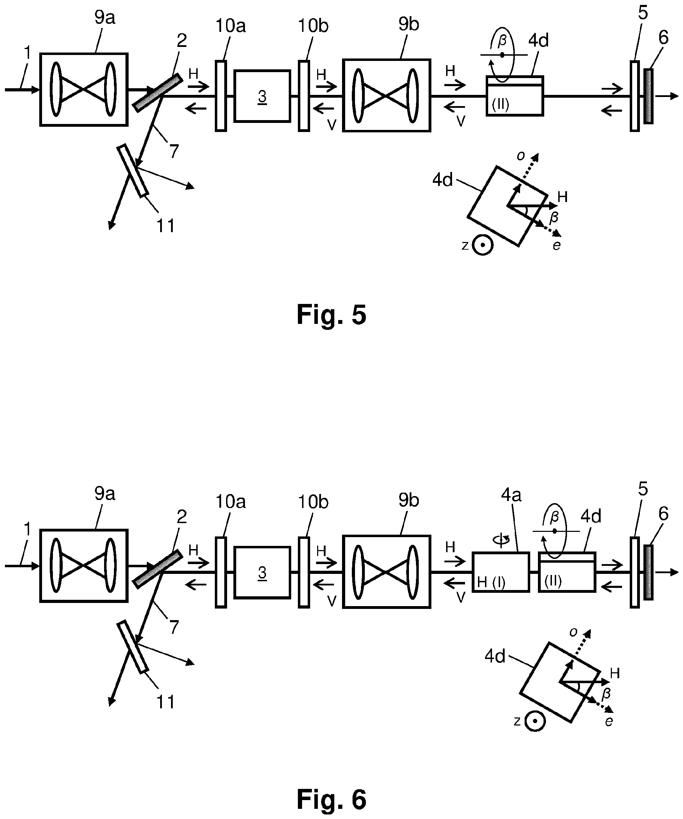

Other embodiments of the present invention are also possible, shown in Figs. 5, 6 and 7, in which type-II SHG is used. In type-II SHG crystal 4d, cascaded nonlinear effects can also take place.

In the scheme of Fig.5, the radiation of linear H polarization propagates through the type-II SHG crystal 4d. Since the crystal 4d is rotated by an angle $\beta$ about the beam propagation direction z, the H polarization splits into o and e polarization components with respect to the crystal principal axes. A different ratio of the amplitudes of the o and e components is obtained depending on the crystal rotation angle $\beta$. As already mentioned, in the presence of unequal amplitudes of polarization components, even without detuning from phase-matching position, cascaded nonlinear effects occur in type-II interaction resulting in the effective refractive index. The value of the nonlinear phase changes by steps of $\pi$ radians at each back-conversion event. How many cascading events manage to happen along the length of the crystal depends on the initial ratio of said amplitudes. Detuning from phase-matching makes it possible to gently adjust the magnitude of the negative nonlinear phase; however, in order to acquire a large amount of nonlinear phase a long crystal will be required.

The scheme of Fig.6 employs two SHG crystals: 4a - cut for type-I interaction, 4d - cut for type-II interaction. The type-II crystal 4d is at phase-matching position, therefore, accumulation of the compensating negative phase occurs in large steps of $\pi$. While the type-I crystal 4a is detuned from phase-matching (for example, angle-tuned) for H polarization and a small amount of compensating negative phase is added up. Thus a precise compensation of the positive nonlinear phase of the system can be accomplished.

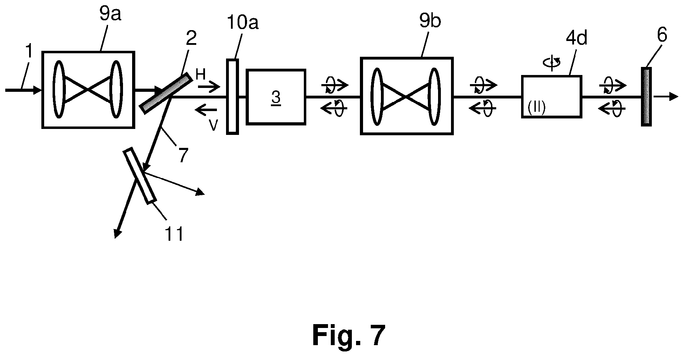

In the scheme of Fig.7, the fundamental radiation of circular polarization propagates through the type-II SHG crystal 4d. Only one waveplate 10a is present in the optical circuit, while there are no other waveplates 10b and 5. The quarter-wave plate 10a converts the radiation of linear H polarization into circularly polarized radiation. The circularly polarized radiation, propagating through the active medium 3, acquires a smaller amount of the nonlinear phase than linearly polarized radiation would acquire. Since other waveplates are absent behind the active medium 3, the radiation of circular polarization propagates through other elements of the system as well. The SHG in the crystal 4d occurs between the o and e polarization components in the coordinate system of the crystal principal axes. A single SHG crystal 4d is sufficient to compensate the accumulated nonlinear phase, because it acts both in a forward pass and in a backward pass. After reflection from the mirror 6, a circularity of polarization reverses but two perpendicular polarization components remain and cascaded nonlinear effects take place. Besides the cascaded nonlinear effects which occur due to a changing ratio between amplitudes of the o and e polarization components, there is a possibility to gently detune from phase-matching configuration by changing the angle or temperature of the crystal.

For implementations of Fig.5-7, in order to avoid unwanted effects on the polarization because of a shift of the linear phase between the o and e polarization components in the type-II crystal (linear refractive indices differ), a length of the crystal 4d can be selected so that the linear phase shift at the end of the crystal is a multiple of $\pi$, preferably a multiple of $2\pi$.

Among the possible choices for SHG crystals for the purposes of this invention are crystals of quadratic nonlinearity with a damage threshold for ultrashort pulse radiation exceeding 20 GW/cm$^2$. These can be BBO, LBO, BIBO, CLBO or other second harmonic generation crystals with the high damage threshold and high effective quadratic nonlinearity.

Other implementations obvious to those skilled in the art of the present invention, which have not been described in the detailed description of the drawings, are also possible. The full scope of legal protection of this invention is set out in the claims.

**Claims**

1. Efficient high-intensity laser system comprising a circuit of optical elements in which a quantum laser amplifier is arranged containing at least one gain element (3, 3a, 3b) and at least one nonlinear phase compensation element (4a, 4b, 4c, 4d), wherein

   - a nonlinear refractive index $n_2$ of said at least one gain element (3, 3a, 3b) is of a positive sign, and a nonlinear refractive index $n_2$ of said at least one nonlinear phase compensation element (4a, 4b, 4c, 4d) is of a negative sign, where
   - said at least one nonlinear phase compensation element (4a, 4b, 4c, 4d) is an optical element with a quadratic nonlinearity in which cascaded nonlinear effects take place,
   **characterized in that**
   - said at least one gain element (3, 3a, 3b) is configured and is pumped so that the input radiation (1) is amplified, thus obtaining a pulse energy of an output radiation (7) of at least 200 mJ,
   - said at least one nonlinear phase compensation element (4a, 4b, 4c, 4d) is configured so that an absolute value of the total negative nonlinear phase yielded in said at least one nonlinear phase compensation element is from $\pi$ to $6\pi$ radians,
   - a residual amount of the nonlinear phase at the output radiation (7), expressed by the value of the *B-integral,* does not exceed $\pi$ radians, and a ratio of spectral widths of said output radiation (7) and said input radiation (1) does not exceed 3.

2. Laser system according to claim 1, **characterized in that**
   durations of pulses of the input radiation (1) entering the laser system and the output radiation (7) exiting the laser system is in the range from 5 ps to 100 ps.

3. Laser system according to any one of the preceding claims, **characterized in that**
   intensity at least in one of the optical elements constituting the laser system exceeds the value of 20 GW/cm$^2$.

4. Laser system according to any one of the preceding claims, **characterized in that**

   - said at least one gain element (3, 3a, 3b) is two isotropic active media (3a, 3b),
   - the optical elements of the laser system are connected into the optical circuit in such a way that the laser radiation through said two isotropic active media (3a, 3b) and through said at least one nonlinear phase compensation element (4a, 4b, 4c, 4d) propagates once,
   - an amplification factor of each of said two isotropic active media (3a, 3b) is in the range from 1 to 10 times, and utilization efficiency of the population inversion is not less than 15% in each of said two isotropic active media (3a, 3b).

5. Laser system according to claims 1-3, **characterized in that**

   - said at least one gain element (3, 3a, 3b) is one isotropic active medium (3),
   - the optical elements of the laser system are connected into the optical circuit in such a way that the laser radiation through said one isotropic active medium (3) and through said at least one nonlinear phase compensation element (4a, 4b, 4c, 4d) propagates twice,

- during each pass through said one isotropic active medium (3), an amplification factor is in the range from 1 to 10 times, and an overall utilization efficiency of the population inversion during the two passes of radiation is not less than 30%.

6. Laser system according to any one of the preceding claims, **characterized in that**
the radiation propagating through said at least one gain element (3, 3a, 3b) is a linearly polarized laser radiation.

7. Laser system according to any one of claims 1 to 5, **characterized in that** the radiation propagating through said at least one gain element (3, 3a, 3b) is a circularly polarized laser radiation.

8. Laser system according to any one of the preceding claims, **characterized in that**

- the radiation propagating through said at least one nonlinear phase compensation element (4a, 4b, 4c, 4d) is a linearly polarized laser radiation, and
- said at least one nonlinear phase compensation element (4a, 4b, 4c, 4d) is a crystal (4) of type-I second harmonic generation or a sequence of crystals ((4a, 4b) or (4a, 4b, 4c)) of type-I second harmonic generation,
- the negative nonlinear refractive index $n_2$ is obtained by realizing the second harmonic generation-under phase-mismatching conditions.

9. Laser system according to claim 8, **characterized in that**
said at least one nonlinear phase compensation element (4a, 4b, 4c, 4d) is a sequence of two crystals (4a, 4b) of second harmonic generation, where

- during the first pass, the radiation propagating through said two crystals (4a, 4b) of second harmonic generation is of a first linear polarization state,
- during the second pass, the radiation propagating through said two crystals (4a, 4b) of second harmonic generation is of a second linear polarization state, perpendicular to the first linear polarization state,
- the first crystal (4a) of second harmonic generation is configured and integrated into the optical circuit in such a way that said phase-mismatching conditions are realized by rotating the crystal (4a) from a phase-matching angle in a plane which is the plane of phase-matching for the first linear polarization state, therefore the first crystal (4a) compensates the amount of a nonlinear phase accumulated during the first pass through all optical elements of the laser system;
- the second crystal (4b) of second harmonic generation is configured and integrated into the optical circuit in such a way that said phase-mismatching conditions are realized by rotating the crystal (4b) from a phase-matching angle in a plane which is the plane of phase-matching for the second linear polarization state, therefore the second crystal (4b) compensates the amount of a nonlinear phase accumulated during the second pass through all the optical elements of the laser system.

10. Laser system according to claim 8, **characterized in that**
said at least one nonlinear phase compensation element (4a, 4b, 4c, 4d) is a sequence of two crystals (4a, 4b) of type-I second harmonic generation, where the first crystal (4a) and the second crystal (4b) are configured so that said phase-mismatching conditions are realized by changing a temperature of the crystals.

11. Laser system according to any one of claims 1 to 7, **characterized in that**

- the radiation propagating through said at least one nonlinear phase compensation element (4a, 4b, 4c, 4d) is a linearly polarized laser radiation, and
- said at least one nonlinear phase compensation element (4a, 4b, 4c, 4d) is a crystal (4d) of type-II second harmonic generation principal axes of which are rotated by an angle $\beta$ with respect to the polarization direction of said linearly polarized laser radiation, and
- the negative nonlinear refractive index $n_2$ is obtained by realizing the second harmonic generation:

  ○ under phase-mismatching conditions, if the angle $\beta$ is equal to 45 degrees, or
  ○ under phase-matching or under phase-mismatching conditions, if the angle $\beta$ is not equal to 45 degrees.

12. Laser system according to any one of claims 1 to 7, **characterized in that**

- the radiation propagating through said at least one nonlinear phase compensation element (4a, 4b, 4c, 4d) is a linearly polarized laser radiation, and
- said at least one nonlinear phase compensation element (4a, 4b, 4c, 4d) is a sequence of type-I second harmonic generation crystals (4a, 4b, 4c) and/or a type-II second harmonic generation crystal (4d), accomplishing cascaded nonlinear effects and obtaining the negative nonlinear phase.

13. Laser system according to any one of claims 1 to 7, **characterized in that**

- the radiation propagating through said at least one nonlinear phase compensation element (4a, 4b, 4c, 4d) is a circularly polarized laser radiation, and
- said at least one nonlinear phase compensation element (4a, 4b, 4c, 4d) is one crystal (4d) or a sequence of crystals of type-II second harmonic generation,
- the negative nonlinear refractive index $n_2$ is obtained by realizing the second harmonic generation under phase-matching or under phase-mismatching conditions.

14. Laser system according to any one of the preceding claims, **characterized in that** the nonlinear phase compensation elements (4a, 4b, 4c, 4d) are selected from the following list of the second harmonic generation crystals: BBO, BIBO, LBO, or CLBO.

15. Laser system according to any one of the preceding claims, **characterized in that** in the output radiation (7), the pulse energy is at least 1 J and a residual amount of the nonlinear phase, expressed by the value of the *B-integral,* does not exceed 1 radian.

16. Laser system according to any one of the preceding claims, **characterized in that** the losses due to the second harmonic generation in said at least one nonlinear phase compensation element (4a, 4b, 4c, 4d) do not exceed 5%.

**Fig. 1**

**Fig. 2**

Fig. 3

Fig. 4

**Fig. 5**

**Fig. 6**

**Fig. 7**

## EUROPEAN SEARCH REPORT

**Application Number**

EP 23 20 6634

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ROTH U ET AL: "Compensation of nonlinear self-focusing in high-power lasers", IEEE JOURNAL OF QUANTUM ELECTRONICS, IEEE, USA, vol. 36, no. 6, 1 June 2000 (2000-06-01), pages 687-691, XP011449710, ISSN: 0018-9197, DOI: 10.1109/3.845724 | 1-7,15, 16 | INV. H01S3/00 H01S3/23 ADD. H01S3/16 |
| Y | * page 687, left-hand column, line 1 – page 691, left-hand column, paragraph 2; figures 1-8 * | 1-16 | |
| X | DORRER C ET AL: "Self-phase modulation compensation in a regenerative amplifier using cascaded second-order nonlinearities", OPTICS LETTERS, OPTICAL SOCIETY OF AMERICA, US, vol. 39, no. 15, 1 August 2014 (2014-08-01), pages 4466-4469, XP001590643, ISSN: 0146-9592, DOI: 10.1364/OL.39.004466 [retrieved on 2014-07-24] | 1-7, 14-16 | |
| Y | * page 4466, left-hand column, paragraph 1 – page 4469, right-hand column, paragraph 2; figures 1-5 * | 1-16 | TECHNICAL FIELDS SEARCHED (IPC) H01S |

-/--

The present search report has been drawn up for all claims

| Place of search | Date of completion of the search | Examiner |
|---|---|---|
| Munich | 16 April 2024 | Laenen, Robert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

# EUROPEAN SEARCH REPORT

**Application Number**

**EP 23 20 6634**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHEN HAO ET AL: "Compensation for Self-Focusing of Picosecond Pulses in Nd:Glass by Using Cascaded Quadratic Nonlinearity", CHINESE PHYSICS LETTERS, INSTITUTE OF PHYSICS PUBLISHING, BRISTOL, GB, vol. 21, no. 12, 1 December 2004 (2004-12-01), pages 2429-2432, XP020027620, ISSN: 0256-307X, DOI: 10.1088/0256-307X/21/12/030 | 1-7, 14-16 | |
| Y | * page 2429, left-hand column, paragraph 1 – page 2432, right-hand column, paragraph 1; figures 1-4 * | 1-16 | |
| Y | XIE ET AL: "Multi-stage pulse compression by use of cascaded quadratic nonlinearity", OPTICS COMMUNICATIONS, ELSEVIER, AMSTERDAM, NL, vol. 273, no. 1, 12 March 2007 (2007-03-12), pages 207-213, XP005923362, ISSN: 0030-4018, DOI: 10.1016/J.OPTCOM.2006.12.011 * page 207, left-hand column, paragraph 1 – page 213, left-hand column, paragraph 1; figures 1-6 * | 8-14 | TECHNICAL FIELDS SEARCHED (IPC) |

-/--

The present search report has been drawn up for all claims

| Place of search | Date of completion of the search | Examiner |
|---|---|---|
| Munich | 16 April 2024 | Laenen, Robert |

EPO FORM 1503 03.82 (P04C01)

Europäisches
Patentamt

European
Patent Office

Office européen
des brevets

# EUROPEAN SEARCH REPORT

**Application Number**

**EP 23 20 6634**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BECKWITT K ET AL: "Compensation of self-focusing using the cascade quadratic nonlinearity", LEOS 2001. 14TH ANNUAL MEETING OF THE IEEE LASERS AND ELECTRO-OPTICS SOCIETY (CAT. NO.01CH37242) IEEE PISCATAWAY, NJ, USA; [ANNUAL MEETING OF THE IEEE LASERS AND ELECTRO-OPTICS SOCIETY], IEEE, vol. 2, 14 November 2001 (2001-11-14), pages 439-440, XP010566512, DOI: 10.1109/LEOS.2001.968861 ISBN: 978-0-7803-7105-7 * page 439, paragraph 1 - page 440, paragraph 3; figures 1-3 * | 1 | |

|  |  |  | TECHNICAL FIELDS SEARCHED (IPC) |
|---|---|---|---|

The present search report has been drawn up for all claims

| Place of search | Date of completion of the search | Examiner |
|---|---|---|
| Munich | 16 April 2024 | Laenen, Robert |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6141362 A, D.D.Meyerhofer and O.A.Konoplev
- EP 1153332 A, D.N.Payne

**Non-patent literature cited in the description**

- **U.ROTH et al.** Compensation of nonlinear self-focusing in high-power lasers. *J. Quantum Electron.*, 2000, vol. 36, 687-691
- **R.DESALVO et al.** Self-focusing and self-defocusing by cascaded second-order effects in KTP. *Opt. Lett.*, 1992, vol. 17, 28-30
- **M.BACHE**. Cascaded nonlinearities for ultrafast nonlinear optical science and applications. Technical University of Denmark, 2017, 14
- **K.BECKWITT et al.** Compensation for self-focusing by use of cascade quadratic nonlinearity. *Opt. Lett.*, 2001, vol. 26, 1696-1698
- **J.P.CAUMES et al.** Direct measurement of wave-front distortion induced during second-harmonic generation: application to breakup-integral compensation. *Opt. Lett.*, 2004, vol. 29, 899-901
- **C.DORRER et al.** Self-phase modulation compensation in a regenerative amplifier using cascaded second-order nonlinearities. *Opt. Lett.*, 2014, vol. 39, 4466-4469
- **A.L.BELOSTOTSKY et al.** Nonlinear phase change in type-II second-harmonic generation under exact phase-matched conditions. *Opt. Lett.*, 1994, vol. 19, 856-858